# EUROPÄISCHE PATENTANMELDUNG

(11) **EP 4 508 981 A1**
(43) Veröffentlichungstag der Anmeldung: **19.02.2025**
(21) Anmeldenummer: 24189816.2
(22) Anmeldetag: 19.07.2024
(51) Int. Cl.: A21C 11/10, A21C 14/00

(54) **TEIGBEARBEITUNGSSTATION MIT SCHUTZABDECKUNG**

(30) Priorität: 10.08.2023 DE 102023121343
(71) Anmelder: Fritsch Bakery Technologies GmbH & Co. KG, 97348 Markt Einersheim (DE)
(72) Erfinder: GROHMANN, Thomas, 97342 Seinsheim (DE)
(74) Vertreter: Grünecker Patent- und Rechtsanwälte PartG mbB

(57) **Zusammenfassung**

Eine Teigbearbeitungsstation (1), umfassend ein Werkzeug (), das zum Eingreifen mit Teig (8) konfiguriert ist, einen Werkzeugantrieb (4), der dazu konfiguriert ist, das Werkzeug (2) in Bewegung zu versetzen, und eine Schutzabdeckung (5), welche dazu konfiguriert ist, in einer Schutzposition (7) einen Schutzbereich (6) der Teigbearbeitungsstation (1) zumindest teilweise abzudecken. Die Schutzabdeckung (5) ist von der Schutzposition (7) in eine Wartungsposition (11) bewegbar. Durch die Bewegung der Schutzabdeckung (5) von der Schutzposition (7) in die Wartungsposition (11) ist der Werkzeugantrieb (4) von dem Werkzeug (2) entkoppelbar.

## Beschreibung

Die Erfindung bezieht sich auf Teigbearbeitungsstationen mit Schutzabdeckungen für die Vorrichtungen, durch welche der Teig bearbeitet werden soll.

Aus der EP 3 987 935 A1 ist eine Vorrichtung zum Bearbeiten von Teig bekannt. Es wird eine Bearbeitungsstation mit einer Satellitenwalzanordnung offenbart. Eine Schutzabdeckung soll einen zu schützenden Bereich abdecken und so verhindern, dass Bedienpersonal während des Betriebs der Vorrichtung Zugriff auf Bereiche der Bearbeitungsstation hat, in denen Verletzungen erfolgen können. Es wird erwähnt, dass Schutzabdeckungen bzw. die Maschinen, an denen sie vorgesehen sind, mit Vorrichtungen ausgestattet sein können, die eine Abwesenheit und/oder einen geöffneten Zustand der Schutzabdeckung erkennen und den Betrieb der jeweiligen Maschine in einem solchen Fall unterbrechen können. Solche Vorrichtungen sehen häufig die Erfassung eines Tokens vor, wie in der DE 10 2017 126 615 A1 im Zusammenhang mit Lebensmittelverpackungsmaschinen beschrieben.

Ebenfalls im Zusammenhang mit Lebensmittelverpackungsmaschinen wird in der DE 10 2017 128 363 A1 eine aufklappbare Schutzabdeckung offenbart, die um eine Achse schwenkbar ist, die sich parallel zu der Produktionsrichtung der Verpackungsmaschine erstreckt.

Erfassungseinheiten zur Erkennung der Anwesenheit von Schutzabdeckungen, wie die oben beschriebenen, können fehleranfällig sein. Außerdem wird häufig die gesamte Maschine angehalten, auch wenn lediglich in einem Teilbereich eine Abwesenheit erkannt wird. Des Weiteren erfolgt die Abschaltung meistens durch Steuersignale, sodass ein Restrisiko verbleiben kann, dass, bspw. durch ein fehlerhaft übermitteltes Abschaltsignal, weiter ein Verletzungsrisiko besteht.

Es ist eine Aufgabe der vorliegenden Erfindung, eine verbesserte Teigbearbeitungsstation anzugeben, die Verletzungsrisiken weiter reduziert und die Benutzerfreundlichkeit erhöht. Diese Aufgabe wird gelöst durch eine Teigbearbeitungsstation mit den Merkmalen des Anspruchs 1.

Es wird eine Teigbearbeitungsstation offenbart, die ein Werkzeug, das zum Eingreifen mit einem Lebensmittelprodukt konfiguriert ist, einen Werkzeugantrieb, der dazu konfiguriert ist, das Werkzeug in Bewegung zu versetzen, und eine Schutzabdeckung, welche dazu konfiguriert ist, in einer Schutzposition einen Schutzbereich der Teigbearbeitungsstation zumindest teilweise abzudecken, umfasst. Die Schutzabdeckung ist von der Schutzposition in eine Wartungsposition bewegbar. Durch die Bewegung der Schutzabdeckung von der Schutzposition in die Wartungsposition ist der Werkzeugantrieb von dem Werkzeug entkoppelbar. Insbesondere kann die Teigbearbeitungsstation derart konfiguriert sein, dass durch die Bewegung der Schutzabdeckung von der Schutzposition in die Wartungsposition der Werkzeugantrieb von dem Werkzeug entkoppelt wird.

Durch die Entkoppelung des Werkzeugantriebs von dem Werkzeug beim Entfernen der Schutzabdeckung aus der Schutzposition kann ein Verletzungsrisiko durch bewegte Teile des Werkzeugs effektiv reduziert werden. Durch das Entkoppeln des Werkzeugantriebs von dem Werkzeug kann außerdem ein bei konventionellen Maschinen durch fehlerhafte Signalübertragung entstehendes Restrisiko eliminiert werden. Außerdem kann durch die erfindungsgemäße Konfiguration die Wartung, bspw. ein Werkzeugwechsel, vereinfacht, und so die Benutzerfreundlichkeit erhöht werden, da das Werkzeug unmittelbar nach dem Bewegen der Schutzabdeckung in die Wartungsposition bereits von dem Werkzeugantrieb entkoppelt ist.

Als Teigbearbeitungsstation können Vorrichtungen angesehen werden, die zum Bearbeiten von Teig in verschiedenen Zuständen und/oder Formen, wie z. B. Teigbändern, Teigsträngen oder Teigstücken, konfiguriert sind. Als Bearbeitung können verschiedene Vorgänge angesehen werden, die einen Eingriff der Teigbearbeitungsstation oder deren Komponenten mit dem zu bearbeitenden Produkt vorsehen. Als Werkzeug können diejenigen Komponenten der Teigbearbeitungsstation angesehen werden, die in Eingriff mit dem zu bearbeitenden Produkt gebracht werden können, z. B. Walzen, Schneidwerkzeuge, wie z. B. Schneidwalzen, Guillotinen, Messer oder Klingen, Formwerkzeuge für Teig, Wickelvorrichtungen, Stanzwerkzeuge, Prägewerkzeuge oder Stüpfelwerkzeuge. Werkzeugantriebe können Aktoren, wie z. B. Motoren oder Zylinder, vorzugsweise Pneumatikzylinder, und/oder Getriebe, wie z. B. Zahnradgetriebe und/oder Koppelgetriebe und/oder Hebelgetriebe umfassen.

Unter einem Schutzbereich kann ein Bereich verstanden werden, der in der Schutzposition durch die Schutzabdeckung zumindest teilweise umschlossen wird. Insbesondere können dies Bereiche sein, in denen der zu bearbeitende Teig gefördert wird. Des Weiteren können Bereiche, in denen die Fördervorrichtung, zum Beispiel ein Förderband, verläuft, als Schutzbereiche definiert sein. Ein Schutzbereich muss nicht vollständig durch die Schutzabdeckung umschlossen werden. Er kann zum Beispiel auch zum Teil durch ein Gestell der Teigbearbeitungsstation oder andere Komponenten der Teigbearbeitungsstation gegen Zugang von außerhalb der Teigbearbeitungsstation abgeschirmt sein. Der Schutzbereich kann dabei insbesondere relativ zu einem Gestell der Station definiert sein, d.h. dass der Schutzbereich nur in der Schutzposition durch die Schutzabdeckung zumindest teilweise abgeschirmt wird. Durch Anordnen der Schutzabdeckung in der Wartungsposition kann die Schutzabdeckung von dem Schutzbereich fortbewegt werden und diesen insbesondere freilegen.

Die Teigbearbeitungsstation kann vorteilhafterweise ein erstes elastisches Element umfassen, welches dazu konfiguriert sein kann, die Bewegung der Schutzabdeckung von der Schutzposition in die Wartungsposition zu unterstützen. Das erste elastische Element kann eine Torsionsfeder, insbesondere eine Schraubenfeder, und/oder eine Gasdruckfeder und/oder eine Biegefeder und/oder ein Elastomer umfassen. Durch das erste elastische Element kann die Teigbearbeitungsstation, insbesondere beim Bewegen der Schutzabdeckung von der Schutzposition in die Wartungsposition eine reduzierte Bedienkraft aufweisen. Insbesondere, wenn die Schutzabdeckung um eine Achse schwenkbar ist, kann das erste elastische Element in einem ersten Hebelabstand von der Achse mit der Schutzabdeckung verbunden sein.

Es kann vorteilhaft sein, wenn der Werkzeugantrieb und/oder eine Kupplung, die dazu konfiguriert sein kann, den Werkzeugantrieb lösbar mit dem Werkzeug zu verbinden, durch die Bewegung der Schutzabdeckung von der Schutzposition in die Wartungsposition in eine entkoppelte Position bewegbar ist. Dadurch kann auf ein Bewegen des Werkzeugs in eine entkoppelte Position verzichtet werden, d. h. eine Positionierung des Werkzeugs, die in manchen Fällen genau eingestellt werden muss, kann erhalten bleiben.

Die Teigbearbeitungsstation kann ein zweites elastisches Element umfassen, das dazu konfiguriert sein kann, die Kupplung und/oder den Werkzeugantrieb zu einer gekoppelten Position vorzuspannen. Das zweite elastische Element kann eine Torsionsfeder, insbesondere eine Schraubenfeder, und/oder eine Gasdruckfeder und/oder eine Biegefeder und/oder ein Elastomer umfassen. Das zweite elastische Element kann mit dem Werkzeugantrieb und/oder der Kupplung verbunden sein.

Zwischen der Schutzposition und der Wartungsposition kann eine erste Zwischenposition vorgesehen sein. Die Teigbearbeitungsstation kann derart konfiguriert sein, dass beim Bewegen der Schutzabdeckung von der Schutzposition in die Wartungsposition die Entkoppelung des Werkzeugantriebs von dem Werkzeug erst nach Passieren der ersten Zwischenposition durch die Schutzabdeckung beginnt oder erfolgt. Dazu kann ein Langloch vorgesehen sein. Insbesondere kann die Schutzabdeckung ein Langloch aufweisen.

Zwischen der Schutzposition und der Wartungsposition kann eine zweite Zwischenposition vorgesehen sein. Die Teigbearbeitungsstation kann derart konfiguriert sein, dass beim Bewegen der Schutzabdeckung von der Wartungsposition in die Schutzposition eine Koppelung des Werkzeugantriebs mit dem Werkzeug erst nach Passieren der zweiten Zwischenposition beginnt oder erfolgt. Dies kann ebenfalls durch ein, z. B. an der Schutzabdeckung vorgesehenes, Langloch ermöglicht werden, insbesondere durch dasselbe Langloch, welches dazu konfiguriert ist, ein Entkoppeln erst nach Passieren der ersten Zwischenposition zu ermöglichen.

Die erste Zwischenposition und die zweite Zwischenposition können identisch oder unterschiedlich sein.

Die Teigbearbeitungsstation kann ein Hebelwerk umfassen. Das Hebelwerk kann dazu konfiguriert sein, die Schutzabdeckung mit dem Werkzeugantrieb und/oder der Kupplung zu verbinden. Zusätzlich oder alternativ kann das Hebelwerk dazu konfiguriert sein, das zweite elastische Element mit dem Werkzeugantrieb und/oder der Kupplung zu verbinden. Insbesondere kann das Hebelwerk derart konfiguriert sein, dass durch ein Bewegen, insbesondere Schwenken, der Schutzabdeckung eine Verschiebung des Werkzeugantriebs und/oder ein Trennen der Kupplung verursacht wird. Als Verbindung zwischen dem Hebelwerk und der Schutzabdeckung kann das Hebelwerk bspw. einen Bolzen umfassen. Die Schutzabdeckung kann das bereits erwähnte Langloch umfassen. Das Langloch kann dazu konfiguriert sein, den Bolzen beim Bewegen, insbesondere Schwenken, der Schutzabdeckung mitzunehmen. Der Bolzen kann dazu konfiguriert sein, sich in das Langloch hinein zu erstrecken. Zum Beispiel kann die Schutzabdeckung, insbesondere das Langloch, und/oder das Hebelwerk, insbesondere der Bolzen, derart konfiguriert sein, dass der Bolzen beim Bewegen, insbesondere Schwenken, der Schutzabdeckung von der Schutzposition in die Wartungsposition erst ab der ersten Zwischenposition mitgenommen wird.

Die Teigbearbeitungsstation, insbesondere die Schutzabdeckung und das Hebelwerk, können derart konfiguriert sein, dass beim Bewegen, insbesondere Schwenken, der Schutzabdeckung von der Wartungsposition zurück zu der Schutzposition der Werkzeugantrieb und/oder die Kupplung erst nach einem Passieren der zweiten Zwischenposition in Richtung der gekoppelten Position bewegt werden. Zum Beispiel kann die Schutzabdeckung, insbesondere das Langloch, und/oder das Hebelwerk, insbesondere der Bolzen, derart konfiguriert sein, dass der Bolzen beim Bewegen, insbesondere Schwenken, der Schutzabdeckung von der Wartungsposition in die Schutzposition erst ab der zweiten Zwischenposition durch das Langloch mitgenommen wird.

Das Hebelwerk, das erste elastische Element und das zweite elastische Element können derart ausgelegt sein, dass die Schutzabdeckung in der ersten Zwischenposition ohne weitere Einwirkung eines Bedieners gehalten werden kann. Alternativ oder zusätzlich können das Hebelwerk, das erste elastische Element und das zweite elastische Element derart ausgelegt sein, dass in der ersten Zwischenposition eine durch das zweite elastische Element auf die Schutzabdeckung ausgeübte Kraft stark genug ist, um ein weiteres Öffnen der Schutzabdeckung ohne weitere Einwirkung eines Bedieners zu verhindern. Alternativ oder zusätzlich können das Hebelwerk, das erste elastische Element und das zweite elastische Element derart ausgelegt sein, dass in der Wartungsposition eine durch das erste elastische Element auf die Schutzabdeckung ausgeübte Kraft stark genug ist, um die Schutzabdeckung in der Wartungsposition zu halten.

Die Schutzabdeckung kann um eine Achse schwenkbar sein. Zum Beispiel kann die Schutzabdeckung um eine Achse von der Schutzposition in die Wartungsposition schwenkbar sein. Dadurch kann die Teigbearbeitungsstation, insbesondere beim Bewegen der Schutzabdeckung von der Schutzposition in die Wartungsposition eine reduzierte Bedienkraft aufweisen, z. B. durch Ausnutzung des Hebeleffekts. Mindestens ein Koppelglied des Hebelwerks kann um die Achse, insbesondere um dieselbe Achse wie die Schutzabdeckung, schwenkbar sein.

Das Hebelwerk, das erste elastische Element und das zweite elastische Element können derart ausgelegt sein, dass die Schutzabdeckung in der ersten Zwischenposition ohne weitere

Einwirkung eines Bedieners gehalten werden kann. Alternativ oder zusätzlich können das Hebelwerk, das erste elastische Element und das zweite elastische Element derart ausgelegt sein, dass in der ersten Zwischenposition ein durch das zweite elastische Element auf die Schutzabdeckung ausgeübtes Moment stark genug ist, um ein weiteres Öffnen der Schutzabdeckung ohne weitere Einwirkung eines Bedieners zu verhindern. Alternativ oder zusätzlich können das Hebelwerk, das erste elastische Element und das zweite elastische Element derart ausgelegt sein, dass in der Wartungsposition ein durch das erste elastische Element auf die Schutzabdeckung ausgeübtes Moment stark genug ist, um die Schutzabdeckung in der Wartungsposition zu halten.

Die Schutzabdeckung kann zwischen der Schutzposition und der ersten Zwischenposition z. B. um einen ersten Schwenkwinkel von mindestens 15°, vorzugsweise mindestens 25°, besonders bevorzugt mindestens 35°, um eine Achse schwenkbar sein. Alternativ oder zusätzlich kann die Schutzabdeckung zwischen der Schutzposition und der ersten Zwischenposition bspw. um einen ersten Schwenkwinkel von höchstens 65°, vorzugsweise höchstens 55°, besonders bevorzugt höchstens 45°, um eine Achse schwenkbar sein.

Die Schutzabdeckung kann zwischen der Schutzposition und der zweiten Zwischenposition z. B. um einen zweiten Schwenkwinkel von höchstens 30°, vorzugsweise höchstens 20°, besonders bevorzugt höchstens 10°, um eine Achse schwenkbar sein.

Die Teigbearbeitungsstation kann einen Förderer umfassen. Der Förderer kann dazu konfiguriert sein, zu bearbeitenden Teig in einer Förderrichtung zu fördern. Die Achse und die Förderrichtung können einen Winkel einschließen, der kleiner als 15°, vorzugsweise kleiner als 10°, besonders bevorzugt kleiner als 5° ist. Die Achse und die Förderrichtung können parallel zueinander orientiert sein. Dadurch kann die Bedienung der Schutzabdeckung von einer Seite des Förderers aus ermöglicht und/oder erleichtert werden.

Die Erfindung bezieht sich auf eine Teigbearbeitungsstation der vorstehend beschriebenen Art. Im Folgenden werden vorteilhafte Ausführungen beispielhaft anhand von Zeichnungen näher erläutert.
Figur 1 zeigt eine Teigbearbeitungsstation in einer schematischen Frontalansicht mit Blickrichtung in Förderrichtung, wobei die Schutzabdeckung in der Schutzposition angeordnet ist.
Figur 2 zeigt die Ansicht aus Figur 1, wobei die Schutzabdeckung in der ersten Zwischenposition angeordnet ist.
Figur 3 zeigt die Ansicht aus Figur 1, wobei die Schutzabdeckung in der Wartungsposition angeordnet ist.
Figur 4 zeigt die Ansicht aus Figur 1, wobei die Schutzabdeckung in der zweiten Zwischenposition angeordnet ist.
Figur 5 zeigt die Ansicht aus Figur 1, wobei die Schutzabdeckung wieder in der Schutzposition angeordnet ist.
Figur 6 zeigt eine schematische Draufsicht von oben auf Komponenten einer Teigbearbeitungsstation gemäß einem weiteren Ausführungsbeispiel.

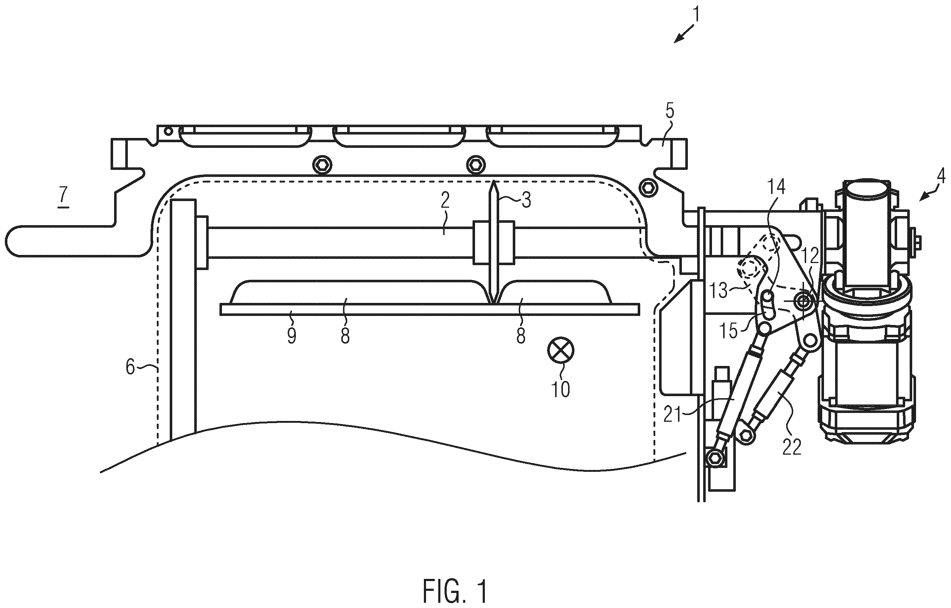

In Figur 1 ist eine Teigbearbeitungsstation 1 in einer schematischen Frontalansicht dargestellt. Die Teigbearbeitungsstation 1 kann ein Werkzeug 2 umfassen. Wie beispielhaft dargestellt, kann das Werkzeug 2 ein Rundmesser 3 umfassen. Die Teigbearbeitungsstation 1 kann einen Werkzeugantrieb 4 umfassen. Der Werkzeugantrieb 4 kann dazu konfiguriert sein, das Werkzeug 2 in Bewegung zu versetzen. Die Teigbearbeitungsstation 1 kann eine Schutzabdeckung 5 umfassen. Die Schutzabdeckung 5 kann dazu konfiguriert sein, einen Schutzbereich 6 der Teigbearbeitungsstation 1 mindestens teilweise abzudecken. In Figur 1 ist die Schutzabdeckung in einer Schutzposition 7 dargestellt. Insbesondere kann die Schutzabdeckung 5 dazu konfiguriert sein, in der Schutzposition 7 den Schutzbereich 6 der Teigbearbeitungsstation 1 zumindest teilweise abzudecken. Die Teigbearbeitungsstation 1 kann dazu konfiguriert sein, einen Teig 8 zu bearbeiten. Beispielsweise kann die Teigbearbeitungsstation 1, insbesondere das Werkzeug 2, dazu konfiguriert sein, mit dem Teig 8 einzugreifen. Beispielhaft ist in Figur 1 ein Werkzeug 2 dargestellt, das dazu konfiguriert ist, den Teig 8 zu schneiden. Die Teigbearbeitungsstation 1 kann des Weiteren einen Förderer 9 umfassen. Der Förderer 9 kann dazu konfiguriert sein, den Teig 8 in einer Förderrichtung 10 zu fördern. In Figur 1 weist die Förderrichtung 10 senkrecht in die Zeichnungsebene hinein.

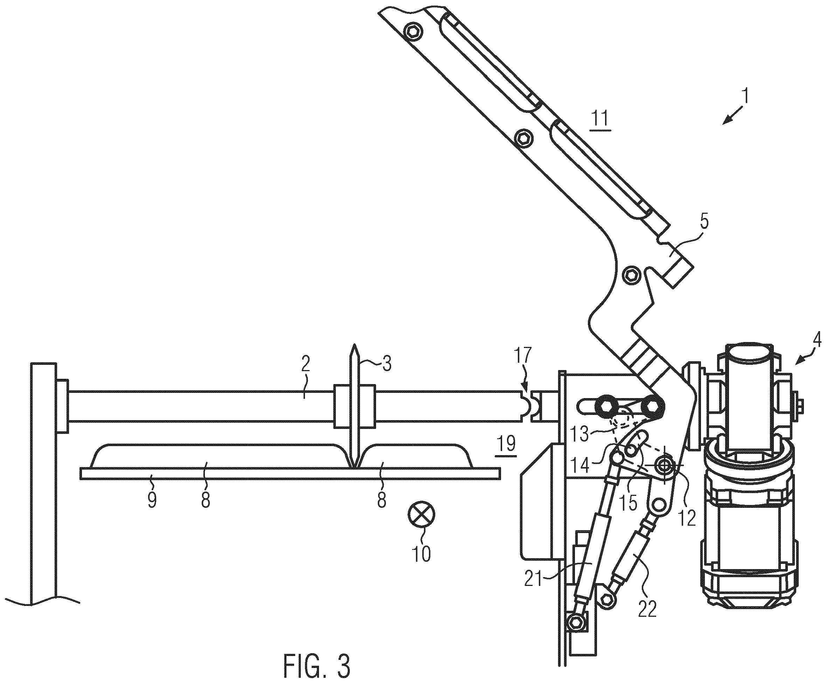

Die Schutzabdeckung 5 kann von der in Figur 1 dargestellten Schutzposition 7 in eine Wartungsposition 11 (siehe Figur 3) bewegbar sein. Wie im mit Bezug auf die Figuren 1 bis 5 erläuterten Ausführungsbeispiel, kann die Schutzabdeckung 5 von der Schutzposition 7 in die Wartungsposition 11 schwenkbar sein, insbesondere um eine Achse 12 schwenkbar sein. Durch die Bewegung, insbesondere das Schwenken, der Schutzabdeckung 5 von der Schutzposition 7 in die Wartungsposition 11 kann der Werkzeugantrieb 4 von dem Werkzeug 2 entkoppelbar sein.

Wie in der vorliegenden Ausführung beispielhaft dargestellt, kann die Teigbearbeitungsstation 1 ein Hebelwerk 13 umfassen, das in den Figuren 1 bis 5 durch gestrichelte Linien angedeutet ist. Das Hebelwerk 13 kann dazu konfiguriert sein, die Schutzabdeckung 5 mit dem Werkzeugantrieb 4 zu verbinden. Insbesondere kann das Hebelwerk 13 derart konfiguriert sein, dass durch ein Schwenken der Schutzabdeckung 5 eine Verschiebung des Werkzeugantriebs 4 verursacht wird. Als Verbindung zwischen dem Hebelwerk 13 und der Schutzabdeckung 5 kann das Hebelwerk 13 einen Bolzen 14 umfassen. Die Schutzabdeckung 5 kann ein Langloch 15 umfassen. Das Langloch 15 kann dazu konfiguriert sein, den Bolzen 14 beim Schwenken der Schutzabdeckung 5 mitzunehmen. Der Bolzen 14 kann dazu konfiguriert sein, sich in das Langloch 15 hinein zu erstrecken.

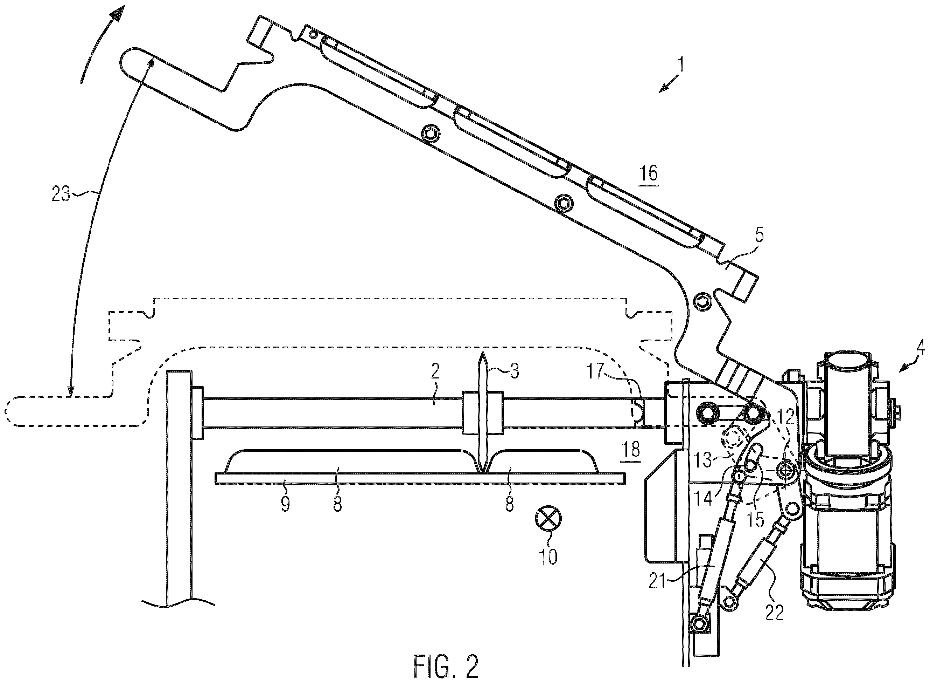

In Figur 2 ist die Schutzabdeckung 5 in einer ersten Zwischenposition 16 dargestellt. Die Teigbearbeitungsstation 1 kann derart konfiguriert sein, dass beim Bewegen, insbesondere Schwenken der Schutzabdeckung 5 von der Schutzposition in die erste Zwischenposition 16 das Werkzeug 2 und der Werkzeugantrieb 4 zunächst gekoppelt bleiben. Beispielsweise kann das Langloch 15 derart konfiguriert sein, dass der Bolzen 14 beim Schwenken der Schutzabdeckung 5 von der Schutzposition 7 in die Wartungsposition 11 erst ab der ersten Zwischenposition 16 mitgenommen wird.

In Figur 2 ist des Weiteren zu erkennen, dass die Teigbearbeitungsstation 1 eine Kupplung 17 umfassen kann. Die Kupplung 17 kann dazu konfiguriert sein, den Werkzeugantrieb 4 lösbar mit dem Werkzeug 2 zu verbinden. Sowohl die Kupplung 17 als auch der Werkzeugantrieb 4 sind in Figur 2 in einer gekoppelten Position 18 dargestellt.

In Figur 3 ist die Schutzabdeckung 5 in einer Wartungsposition 11 dargestellt. Es ist zu erkennen, dass durch das Schwenken der Schutzabdeckung 5 von der Schutzposition 7 in Richtung der Wartungsposition 11 über die erste Zwischenposition 16 hinaus der Werkzeugantrieb 4 von dem Werkzeug 2 entkoppelt werden kann. Insbesondere kann die Teigbearbeitungsstation 1, insbesondere die Schutzabdeckung 5 und das Hebelwerk 13, derart konfiguriert sein, dass durch Bewegen, insbesondere Schwenken, der Schutzabdeckung 5 von der Schutzposition 7 in die Wartungsposition 11 der Werkzeugantrieb 4 und/oder die Kupplung 17 in eine entkoppelte Position 19 bewegt werden können.

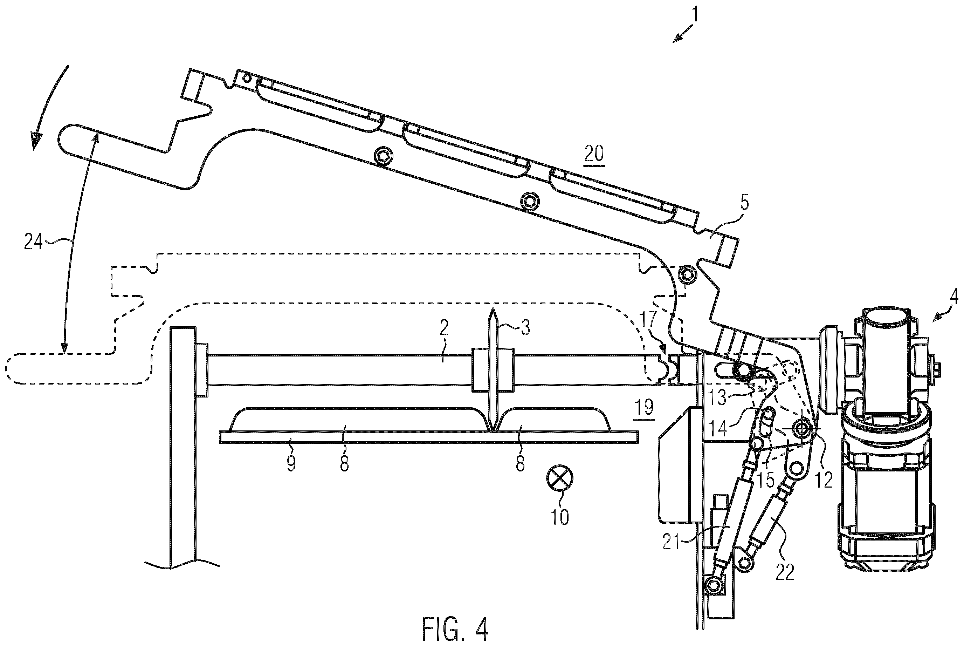

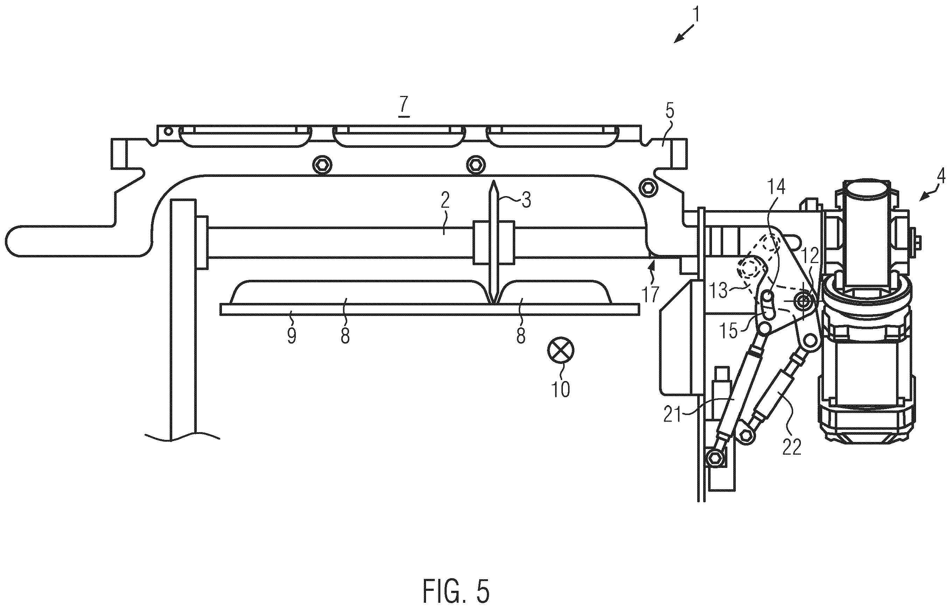

In Figur 4 ist die Schutzabdeckung 5 in einer zweiten Zwischenposition 20 dargestellt. Die Teigbearbeitungsstation 1, insbesondere die Schutzabdeckung 5 und das Hebelwerk 13, können derart konfiguriert sein, dass beim Bewegen, insbesondere Schwenken, der Schutzabdeckung 5 von der Wartungsposition 11 zurück zu der Schutzposition 7 der Werkzeugantrieb 4 und/oder die Kupplung 17 erst nach einem Passieren der zweiten Zwischenposition 20 in Richtung der gekoppelten Position 18 bewegt werden. Zum Beispiel kann die Schutzabdeckung 5, insbesondere das Langloch 15, und/oder das Hebelwerk 13, insbesondere der Bolzen 14, derart konfiguriert sein, dass der Bolzen 14 beim Bewegen, insbesondere Schwenken, der Schutzabdeckung 5 von der Wartungsposition 11 in die Schutzposition 7 erst ab der zweiten Zwischenposition 20 durch das Langloch 15 mitgenommen wird. In Figur 5 ist die Schutzabdeckung 5 wiederum in der Schutzposition 7 dargestellt. In der Schutzposition 7 können der Werkzeugantrieb 4 und/oder die Kupplung 17 der in der gekoppelten Position 18 angeordnet sein.

Wie in den Figuren 1 bis 5 ebenfalls zu erkennen, kann die Teigbearbeitungsstation 1 ein erstes elastisches Element 21 umfassen. Das erste elastische Element 21 kann dazu konfiguriert sein, die Bewegung der Schutzabdeckung 5 von der Schutzposition 7 in die Wartungsposition 11 zu unterstützen. Wie in den Figuren 1 bis 5 ebenfalls zu erkennen, kann die Teigbearbeitungsstation 1 ein zweites elastisches Element 22 umfassen. Das zweite elastische Element 22 kann dazu konfiguriert sein, die Kupplung 17 und/oder den Werkzeugantrieb 4 zu der gekoppelten Position 18 vorzuspannen. Das Hebelwerk 13, das erste elastische Element 21 und das zweite elastische Element 22 können derart ausgelegt sein, dass die Schutzabdeckung 5 in der ersten Zwischenposition 16 ohne weitere Einwirkung eines Bedieners gehalten werden kann. Das Hebelwerk 13, das erste elastische Element 21 und das zweite elastische Element 22 können derart ausgelegt sein, dass in der ersten Zwischenposition 16 ein durch das zweite elastische Element 22 auf die Schutzabdeckung 5 ausgeübte Moment stark genug ist, um ein weiteres Öffnen der Schutzabdeckung ohne weitere Einwirkung eines Bedieners zu verhindern. Das Hebelwerk 13, das erste elastische Element 21 und das zweite elastische Element 22 können derart ausgelegt sein, dass in der Wartungsposition ein durch das erste elastische Element 21 auf die Schutzabdeckung 5 ausgeübtes Moment stark genug ist, um die Schutzabdeckung 5 in der Wartungsposition 11 zu halten.

Zwischen der Schutzposition 7 und der ersten Zwischenposition 16 kann die Schutzabdeckung 5 um einen ersten Schwenkwinkel 23 (siehe Figur 2) schwenkbar sein. Zwischen der Schutzposition 7 und der zweiten Zwischenposition 20 kann die Schutzabdeckung 5 um einen zweiten Schwenkwinkel 24 (siehe Figur 4) schwenkbar sein.

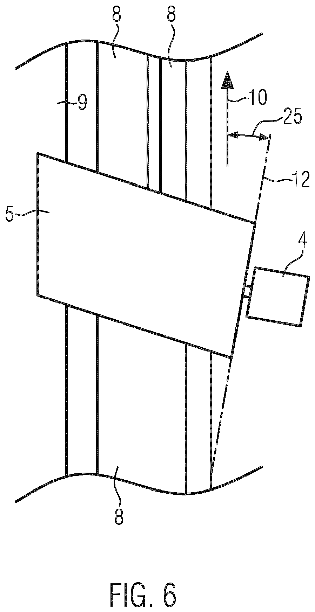

In Figur 6 sind Komponenten einer Teigbearbeitungsstation 1 gemäß einem weiteren Ausführungsbeispiel dargestellt. Gemäß diesem Ausführungsbeispiel können die Förderrichtung 10 und die Achse 12, um welche die Schutzabdeckung 5 schwenkbar sein kann, in einem Winkel 25 zueinander orientiert sein. Alle weiteren Komponenten können analog zu dem mit Bezug auf die Figuren 1 bis 5 erläuterten Ausführungsbeispiel konfiguriert sein.

## Patentansprüche

1. Teigbearbeitungsstation (1), umfassend ein Werkzeug (), das zum Eingreifen mit Teig (8) konfiguriert ist, einen Werkzeugantrieb (4), der dazu konfiguriert ist, das Werkzeug (2) in Bewegung zu versetzen, und eine Schutzabdeckung (5), welche dazu konfiguriert ist, in einer Schutzposition (7) einen Schutzbereich (6) der Teigbearbeitungsstation (1) zumindest teilweise abzudecken, wobei die Schutzabdeckung (5) von der Schutzposition (7) in eine Wartungsposition (11) bewegbar ist, und wobei durch die Bewegung der Schutzabdeckung (5) von der Schutzposition (7) in die Wartungsposition (11) der Werkzeugantrieb (4) von dem Werkzeug (2) entkoppelbar ist.

2. Teigbearbeitungsstation nach Anspruch 1, des Weiteren umfassend ein erstes elastisches Element (21), welches dazu konfiguriert ist, die Bewegung der Schutzabdeckung (5) von der Schutzposition (7) in die Wartungsposition (11) zu unterstützen.

3. Teigbearbeitungsstation nach einem der vorangehenden Ansprüche, wobei der Werkzeugantrieb (4) und/oder eine Kupplung (17), die dazu konfiguriert ist, den Werkzeugantrieb (4) lösbar mit dem Werkzeug (2) zu verbinden, durch die Bewegung der Schutzabdeckung (5) von der Schutzposition (7) in die Wartungsposition (11) in eine entkoppelte Position (19) bewegbar ist.

4. Teigbearbeitungsstation nach Anspruch 3, des Weiteren umfassend ein zweites elastisches Element (22), das dazu konfiguriert ist, die Kupplung (17) und/oder den Werkzeugantrieb (4) zu einer gekoppelten Position (18) vorzuspannen.

5. Teigbearbeitungsstation nach einem der vorangehenden Ansprüche, wobei zwischen der Schutzposition (7) und der Wartungsposition (11) eine erste Zwischenposition (16) vorgesehen ist, und wobei die Teigbearbeitungsstation (1) derart konfiguriert ist, dass beim Bewegen der Schutzabdeckung (5) von der Schutzposition (7) in die Wartungsposition (11) die Entkoppelung des Werkzeugantriebs (4) von dem Werkzeug (2) erst nach Passieren der ersten Zwischenposition (16) durch die Schutzabdeckung (5) beginnt.

6. Teigbearbeitungsstation nach einem der vorangehenden Ansprüche, wobei zwischen der Schutzposition (7) und der Wartungsposition (11) eine zweite Zwischenposition (20) vorgesehen ist, und wobei die Teigbearbeitungsstation (1) derart konfiguriert ist, dass beim Bewegen der Schutzabdeckung (5) von der Wartungsposition (11) in die Schutzposition (7) eine Koppelung des Werkzeugantriebs (4) mit dem Werkzeug (2) erst nach Passieren der zweiten Zwischenposition (20) beginnt.

7. Teigbearbeitungsstation nach einem der vorangehenden Ansprüche, wobei die Schutzabdeckung (5) von der Schutzposition (7) in die Wartungsposition (11) um eine Achse (12) schwenkbar ist.

8. Teigbearbeitungsstation nach einem der Ansprüche 5 bis 7, wobei die Schutzabdeckung (5) zwischen der Schutzposition (7) und der ersten Zwischenposition (16) um einen ersten Schwenkwinkel (23) von mindestens 15°, vorzugsweise mindestens 25°, besonders bevorzugt mindestens 35°, um eine Achse (12) schwenkbar ist.

9. Teigbearbeitungsstation nach einem der Ansprüche 5 bis 8, wobei die Schutzabdeckung (5) zwischen der Schutzposition (7) und der ersten Zwischenposition (16) um einen ersten Schwenkwinkel (23) von höchstens 65°, vorzugsweise höchstens 55°, besonders bevorzugt höchstens 45°, um eine Achse (12) schwenkbar ist.

10. Teigbearbeitungsstation nach einem der Ansprüche 6 bis 9, wobei die Schutzabdeckung (5) zwischen der Schutzposition (7) und der zweiten Zwischenposition (20) um einen zweiten Schwenkwinkel von höchstens 30°, vorzugsweise höchstens 20°, besonders bevorzugt höchstens 10°, um eine Achse (12) schwenkbar ist.

11. Teigbearbeitungsstation nach einem der Ansprüche 7 bis 10, des Weiteren umfassend einen Förderer (9), der dazu konfiguriert ist, zu bearbeitenden Teig (8) in einer Förderrichtung (10) zu fördern, wobei die Achse (12) und die Förderrichtung (10) einen Winkel (25) einschließen, der kleiner als 15°, vorzugsweise kleiner als 10°, besonders bevorzugt kleiner als 5° ist.

12. Teigbearbeitungsstation nach einem der Ansprüche 7 bis 10, des Weiteren umfassend einen Förderer (9), der dazu konfiguriert ist, zu bearbeitenden Teig (8) in einer Förderrichtung (10) zu fördern, wobei die Achse (12) und die Förderrichtung (10) parallel zueinander orientiert sind.
